# EUROPEAN PATENT SPECIFICATION

(11) **EP 2 161 644 B1**
(45) Date of publication and mention of the grant of the patent: **26.12.2012**
(21) Application number: 09169123.8
(22) Date of filing: 01.09.2009
(51) Int. Cl.: G05G 1/10, G05G 5/03

(54) **Operation feeling imparting type input device**
Bediengefühl gebende Eingabevorrichtung
Dispositif de saisie de type transmission facilitant le fonctionnement

(30) Priority: 05.09.2008 JP 2008228474
(43) Date of publication of application: 10.03.2010
(73) Proprietor: Alps Electric Co., Ltd., Tokyo 145-8501 (JP)
(72) Inventor: Furuki, Shigeru, Tokyo 145-8501 (JP)
(74) Representative: Waibel, Stefan Christopher

(56) References cited:
- WO-A1-02/088864
- DE-U1- 20 219 655
- US-A1- 2006 054 427

## Description

### BACKGROUND

### 1. Technical Field

The present invention relates to an operation feeling imparting type input device which can be used as an input device in various electronic apparatuses or in-vehicle electric components, and can impart a dynamic operation feeling to an operator at the time of use.

### 2. Related Art

With regard to such an operation feeling imparting type input device, related art is known in which the rotation of an operating knob is regulated by an electromagnetic brake, thereby imparting a feeling of resistance to the rotation of the operating knob (for example, see Japanese Unexamined Patent Application Publication No. 2005-19113). According to this related art, the operation of the electromagnetic brake is controlled while the rotation angle of the operating knob is detected by a rotary encoder, and if the operating knob is operated to a certain rotation angle, the electromagnetic brake is driven at once so as to inhibit the rotation of the operating knob and to lock the operating knob. Thus, the feeling of resistance (a feeling of collision against a wall) of the rotation direction is imparted to the operator, so the operator can feel that further rotation is impossible.

Unlike a case where the rotation is regulated by a mechanical stopper or the like, in the locking by the electromagnetic brake, the rotation in a direction opposite to the previous direction is regulated. For this reason, even though the operator tries to return the operating knob in the opposite direction, the operating knob remains fixed in the locked state. According to the related art, an elastic member is provided between the operating knob and the electromagnetic brake, and when the operating knob is operated in the locked state, the elastic member is bent to allow the detection of the rotation direction after the locking. Therefore, flexible control can be realized such that the locked state is maintained when the operating knob is rotated in the same direction as the previous direction, and the locked state is released when the operating knob is returned in the opposite direction.

In accordance with the preamble of claim 1, WO 02/088864 A1 discloses an operation feeling imparting type input device in which an inner ring and an outer ring are mounted on the rotation shaft. When an electromagnet is activated, the outer ring is mechanically stopped by braking teeth proving on a braking element. Then, a limited movement of the axis of said inner ring with respect to the outer ring is possible due to partly circumferential recesses provided in the outer periphery of the inner ring into which engagement protrusions are inserted. Said protrusions are centered within the recesses by means of springs.

### SUMMARY

According to the above-described related art, even if a locking feeling is imparted to the operating knob, a slight operational force is given to the operating knob in the direction opposite to the previous direction, which easily releases the locked state. Therefore, excellent operational convenience is achieved, and thus the related art has a high technical value.

The inventors have focused that the elastic member used in the related art needs to be twisted (bent) by a comparatively weak operational force, and to this end, a certain level of length in a thrust direction (rotation axis direction) is needed, and have studied further improvement. That is, an advantage of some aspects of the invention is that it provides an operation feeling imparting type input device capable of realizing a reduction in size in a thrust direction.

The invention employs the following means for solving the above-described problems.

According to an aspect of the invention, an operation feeling imparting type input device includes a rotation shaft supported so as to be rotatable together with a rotation operating member to be rotated by an operator, rotation detection means having a body to be detected configured to rotate together with the rotation shaft, and having a detector configured to detect the rotation state of the body to be detected, a rotor member provided to be spread in a radial direction of the rotation shaft and configured to rotate together with the rotation shaft, a friction plate provided so as to be rotatable around the same central axis line as the rotation shaft and the rotor member and to be freely displaced in a thrust direction of the rotor member with respect to the rotor member, a rotation transmission mechanism configured to transmit the rotation of the rotor member to a friction member so as to rotate the friction plate so that it follows the rotor member, rotation regulation means configured to absorb the friction plate in the thrust direction of the rotor member and to regulate the rotation of the friction plate by a frictional force due to the absorption, control means configured to control the operation state of the rotation regulation means on the basis of the detection result of the rotation detection means, and rotation elasticity imparting means configured to impart an elastic force in a rotation direction to the rotation transmission mechanism so as to permit the body to be detected to be relatively rotated with respect to the friction plate together with the rotor member if the rotation operating member is operated to rotate in a state where the rotation of the friction plate is regulated by the rotation regulation means.

This operation feeling imparting type input device has the following functions with the above-described basic configuration. That is, if the rotation operating member is operated to rotate by the operator (user), accordingly, the rotation shaft is rotated together with the rotation operating member. The rotation of the rotation shaft causes the body to be detected to be rotated, and the detector detects the rotation state of the body to be rotated. The rotor member is rotated together with the rotation shaft in a state being spread in the radial direction of the rotation shaft. In this case, if the control means does not activate the rotation regulation means (the rotation of the friction plate is not regulated), the rotation of the rotor member is transmitted to the friction plate by the rotation transmission mechanism, and the friction plate is rotated to follow the rotation shaft and the rotor member. In contrast, if the control means activates the rotation regulation means, when the rotation operating member is operated, the rotation transmission mechanism continuously transmits the rotation of the rotor member to the friction plate. In this case, the rotation elasticity imparting means imparts the elastic force in the rotation direction to the rotation transmission mechanism, and the rotation that should be transmitted to the friction plate is absorbed by the elastic force. When this happens, even though the rotation of the friction plate is regulated (the friction plate is locked), the rotation of the body to be detected is permitted together with the rotor member, and thus the rotation state (rotation direction) can be detected. Therefore, control can be realized such that, for example, when rotation is detected in the direction opposite to the direction before the rotation of the friction plate is regulated, the control means deactivates the rotation regulation means to enable the free rotation of the rotation operating member.

First, the operation feeling imparting type input device has the following feature. The rotation transmission mechanism includes an engagement protrusion provided at the friction plate, and an engagement clip portion provided at the rotor member. Of these, the engagement protrusion projects from the friction plate toward the rotor member. The engagement clip portion has a pair of clip walls which transmit a rotational force from the rotor member to the engagement protrusion with the engagement protrusion sandwiched therebetween from both sides in the rotation direction of the rotor member. The rotation elasticity imparting means has an elastic portion which is elastically deformed by a reactive force from the engagement protrusion when the rotation operating member is operated to rotate in a state where the rotation of the friction plate is regulated, thereby displacing the engagement clip portion so as to permit the relative rotation of the rotor member.

With this operation feeling imparting type input device, the engagement clip portion is configured to transmit the rotation with the engagement protrusion sandwiched from both sides in the rotation direction. When the rotation of the friction plate is regulated, the direction of elastic deformation by the elastic portion corresponds to the rotation direction (or the opposite direction). For this reason, the elastic portion can be elastically deformed while the length in the thrust direction is not particularly limited, and thus there is no increase structurally in size in the thrust direction.

Second, the operation feeling imparting type input device has the following feature. The rotor member is configured to have a receiving portion which receives the engagement protrusion projecting from the friction plate toward the rotor member. The receiving portion includes a pair of regulation walls which are provided on both sides of the engagement clip portion at an interval in the rotation direction. The receiving portion permits the engagement protrusion to be relatively moved in the rotation direction between the pair of regulation walls in a state where the engagement protrusion is received between the regulation walls and regulates the movement of the engagement protrusion in a state where the regulation walls are in contact with the engagement protrusion.

In this case, even if the operational force is imparted to the rotation operating member in a state where the rotation of the friction plate is regulated, the engagement protrusion is relatively moved between the pair of regulation walls due to elastic deformation of the elastic portion, so the rotation state of the body to be detected can be detected, as described above. Further, if the rotation operation is made to a certain angle, the engagement protrusion eventually comes into contact with one of the pair of regulation walls, and thus further rotation is regulated. Therefore, the elastic portion can be prevented from being excessively deformed (for example, yield) or broken.

Third, the operation feeling imparting type input device may have the above-described basic configuration and also the following feature. The rotation transmission mechanism is configured such that the engagement protrusion is provided at the rotor member, and the engagement clip portion is provided at the friction plate. In this case, the engagement protrusion projects from the rotor member toward the friction plate. The engagement clip portion has a pair of clip walls which receive a rotational force from the rotor member through the engagement protrusion with the engagement protrusion sandwiched therebetween from both sides in the rotation direction of the friction plate. The rotation elasticity imparting means has an elastic portion which is elastically deformed by a reactive force from the engagement clip portion when the rotation operating member is operated to rotate in a state where the rotation of the friction plate is regulated, thereby displacing the engagement protrusion so as to permit the relative rotation of the rotor member.

With this operation feeling imparting type input device, the engagement protrusion transmits the rotation to the engagement clip portion while being sandwiched from both sides in the rotation direction. When the rotation of the friction plate is regulated, the direction of elastic deformation of the elastic portion and the direction of displacement of the engagement protrusion correspond to the rotation direction (or the opposite direction). For this reason, the elastic portion can be elastically deformed while the length in the thrust direction is not particularly limited, and thus there is no increase structurally in size in the thrust direction.

Fourth, the operation feeling imparting type input device has the following feature. The rotor member where the engagement protrusion is provided has a pair of cutout portions which are formed on both sides of the engagement protrusion to permit or regulate the displacement of the engagement protrusion. The pair of cutout portions form a pair of regulation walls on both sides of the engagement protrusion at an interval in the rotation direction. The pair of cutout portions permit the displacement of the engagement protrusion in the rotation direction between the regulation walls and regulate the displacement of the engagement protrusion in a state where the engagement protrusion is in contact with the regulation walls.

If the rotor member has a pair of cutout portions (a pair of regulation walls), when the operational force is imparted to the rotation operating member in a state where the rotation of the friction plate is regulated, the engagement protrusion is relatively moved between the pair of regulation walls (within the range of the cutout portions) due to elastic deformation of the elastic portion, so the rotation state of the body to be detected can be detected, as described above. Further, if the rotation operation is made to a certain angle, the engagement protrusion eventually comes into contact with one of the pair of regulation walls, and thus further rotation is regulated. Therefore, the elastic portion can be prevented from being excessively deformed (for example, yield) or broken.

Fifth, the operation feeling imparting type input device may have the following configuration with regard to the fourth feature. The rotor member has a main body portion which has a disk shape centered around the rotation shaft, and a pair of cutout portions are formed to extend from the outer edge of the main body portion toward the rotation shaft. Part of a portion of the main body portion which extends in a peninsula shape from an inner position to the outer edge while being sandwiched between the pair of cutout portions forms the engagement protrusion, and a base end portion at the inner position forms the elastic portion.

With this configuration, the engagement protrusion or the elastic portion can be formed on the rotor member itself, and thus the number of parts can be reduced by as much.

Sixth, the operation feeling imparting type input device may have the following configuration with regard to the first to fifth features. The friction plate has a through hole into which the rotation shaft is inserted in the thickness direction, and a clearance which is defined between the inner circumferential surface of the through hole and the outer circumferential surface of the rotation shaft. The clearance permits the displacement of the friction plate in the thrust direction without restriction in the direction of the central axis line of the rotation shaft.

In this case, the friction plate is freely displaced in the thrust direction, and is not restricted in the direction of the central axis line of the rotation shaft. Therefore, the friction plate can be constantly and uniformly absorbed with respect to the rotation regulation means. For example, in a structure in which the friction plate slides along the outer circumferential surface of the rotation shaft, the friction plate is restricted in the direction of the central axis line by the rotation shaft, so there is a possibility that the state when the friction plate is absorbed to the rotation regulation means changes depending on the positional relationship between the rotation shaft and the rotation regulation means, or the angle between the central axis line and the rotation regulation means at the same time, so a variation in the frictional force occurs. In contrast, in a structure in which the clearance is defined, the friction plate can be absorbed to the rotation regulation means without influence on the rotation shaft, and thus a frictional force can be generated stably.

Seventh, the operation feeling imparting type input device may have the following configuration with regard to the third to sixth features. The rotor member is provided with at least three engagement protrusions in the rotation direction, and the friction plate is provided with the same number of engagement clip portions as the engagement protrusions.

With this configuration, the engagement of the engagement protrusions and the engagement clip portions is made throughout the rotation direction of the rotor member, and thus a shear with respect to the rotation center (central axis line) can be suppressed.

Eighth, the operation feeling imparting type input device may further include contact elasticity imparting means configured to impart an elastic force in the absorption direction to the friction plate and to permit free rotation in a state where the friction plate is in contact with the rotation regulation means by the elastic force.

In this case, even if the control means does not activate the rotation regulation means, the friction plate remains to be in contact with the rotation regulation means by the elastic force. For this reason, at the moment the control means activates the rotation regulation means, the friction plate can be prevented from colliding against the rotation regulation means by the absorption, and an impact sound can be prevented from being generated.

The contact elasticity imparting means clamps the engagement protrusion, which projects from the rotor member toward the friction plate, to the friction plate, thereby imparting the elastic force in the absorption direction through the engagement protrusion.

With this configuration, it is not necessary to provide a new part serving as the contact elasticity imparting means, so an increase in the number of parts can be suppressed by as much. Further, the engagement protrusion is prevented from slipping out from the engagement clip portion, so the idle rotation of the rotor member can be suppressed.

When the fifth feature is provided, of the main body portion of the rotor member, a base end portion at an inner position of a portion which extends in a peninsula shape from the inner position to the outer edge with sandwiched between a pair of cutout portions forms elastic portion, and the base end portion forms the contact elasticity imparting means. With this configuration, the parts of the rotor member can be given many functions, and thus a more reasonable structure can be realized.

According to this operation feeling imparting type input device, the reduction in size in the thrust direction can be achieved without sacrificing the same basic functionality as that the previous devices have. Further, a structure can be realized which prevents parts from being damaged due to an excessive operation, and has excellent durability.

### BRIEF DESCRIPTION OF THE DRAWINGS

Fig. 1 is a schematic view showing the overall configuration of an operation feeling imparting type input device of a first embodiment.
Figs. 2A to 2C are successive views (including a section taken along the line II-II in Fig. 1) showing the arrangement of the respective members on the surface of the rotor member and the activation states.
Fig. 3 is a diagram (including a section taken along the line III-III in Fig. 1) showing just a friction plate.
Fig. 4 is a diagram showing an example of the relationship between the rotation angle of a rotation operating member and the electromagnetic force by an electromagnetic brake.
Fig. 5 is a longitudinal sectional view partially showing the configuration of an operation feeling imparting type input device of a second embodiment.
Figs. 6A and 6B are diagrams (including a section taken along the line VI-VI in Fig. 5) showing the arrangement of the respective members on the surface of the rotor member and the activation states.
Fig. 7 is a diagram (including a section taken along the line VII-VII in Fig. 5) showing just a friction plate in the second embodiment.
Fig. 8 is a longitudinal sectional view partially showing the configuration of an operation feeling imparting type input device of a third embodiment.
Fig. 9 is a diagram (including a section taken along the line IX-IX in Fig. 8) showing the arrangement of the respective members on the surface of the rotor member and the activation states.
Fig. 10 is a diagram (including a section taken along the line X-X in Fig. 8) showing just a friction plate in the third embodiment.
Fig. 11 is a longitudinal sectional view partially showing the configuration of an operation feeling imparting type input device of a fourth embodiment.
Fig. 12 is a successive view (including a section taken along the line XII-XII in Fig. 11) showing the arrangement of the respective members on the surface of the rotor member and the activation states.
Fig. 13 is a diagram (including a section taken along the line XIII-XIII in Fig. 11) showing just a friction plate in the fourth embodiment.
Fig. 14 is a partial sectional view showing an example where an additional element is provided in a clip-shaped member of the first embodiment.

### DESCRIPTION OF EXEMPLARY EMBODIMENTS

Embodiments of the invention will now be described with reference to the drawings. An operation feeling imparting type input device according to an embodiment of the invention may be used as an input device (user interface) for various electronic apparatuses (computers, audio apparatuses, and video apparatuses) and also in-vehicle electric components, such as a car navigation device and the like. With regard to the operation feeling imparting type input device, various embodiments are made in accordance with the difference in the specific structure. Hereinafter, the operation feeling imparting type input device will be described with respect to plural exemplary embodiments.

### First Embodiment

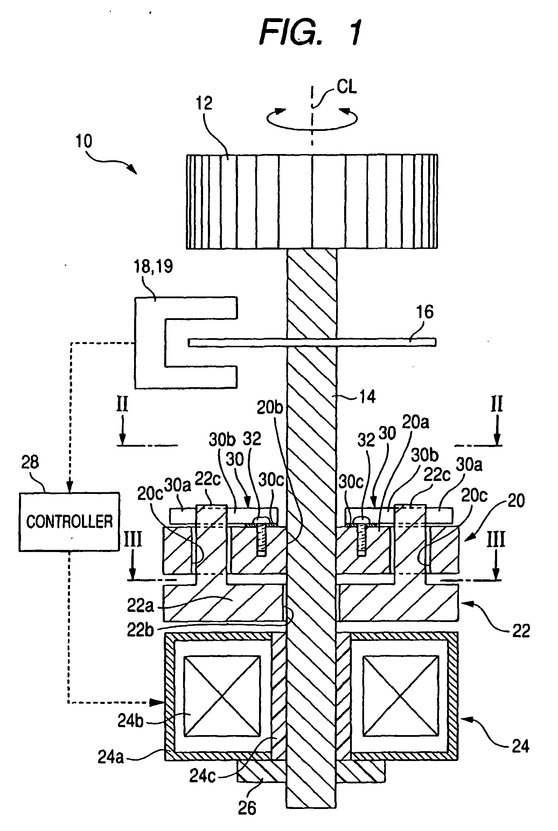

Fig. 1 is a schematic view showing the overall configuration of an operation feeling imparting type input device 10 of a first embodiment. In Fig. 1, most of the mechanical configuration of the operation feeling imparting type input device 10 is shown by a longitudinal sectional view. Further, in Fig. 1, the electrical configuration of the operation feeling imparting type input device 10 is shown by a block diagram.

### Rotation Operating Member

The operation feeling imparting type input device 10 has a rotation operating member 12. The rotation operating member 12 has, for example, a rotary-type knob shape (dial shape). An operator can grip and rotate the rotation operating member 12. In this case, the rotation operating member 12 is rotated around a central axis line CL which is indicated by a one-dot-chain line in the drawing.

### Rotation Shaft

The rotation operating member 12 is connected to one end of a rotation shaft 14, for example. The rotation shaft 14 extends from the rotation operating member 12 in one direction (lower direction in Fig. 1) along the central axis line CL. The rotation shaft 14 is rotated around the central axis line CL together with the rotation operating member 12.

### Detection of Rotation State

Onto the outer circumference of the rotation shaft 14, a code plate 16 serving as a body to be detected is attached. The code plate 16 has a thin disk shape centered around the rotation shaft 14, and slits (not shown) are formed at regular pitches in the circumferential direction of the code plate 16. In the outer circumferential portion of the code plate 16, an index (light shielding portion) is formed in the circumferential direction with a reference position of the rotation direction as a base point.

Two photo-interrupters 18 and 19 serving as detectors are provided close to the rotation shaft 14. Of these, the photo-interrupter 18 is arranged such that detection light transmits the slits of the code plate 16. The photo-interrupter 19 is arranged such that detection light is shielded by the index at the reference position. If the rotation operating member 12 is operated to rotate, the code plate 16 is rotated together with the rotation shaft 14, and a rotation angle signal (encoder pulse) is output from the photo-interrupter 18. Further, a rotation direction signal (ON/OFF signal) with respect to the reference position is output from the photo-interrupter 19 in accordance with the rotation direction at that time.

### Rotor Member

A rotor member 20 is attached in the vicinity of the center of the rotation shaft 14 when viewed from the longitudinal direction of the rotation shaft 14. The rotor member 20 has a disk-shaped main body portion 20a, and the main body portion 20a is spread in a radial direction centered around the rotation shaft 14. A through hole 20b is formed at the center of the main body portion 20a. The through hole 20b is formed to pass through the main body portion 20a in the thickness direction. The rotor member 20 is fixed (fitted) to the rotation shaft 14 in a state where the rotation shaft 14 is inserted into the through hole 20b. For this reason, if the rotation operating member 12 is operated, the rotor member 20 is rotated around the central axis line CL together with the rotation shaft 14.

### Friction Plate

A friction plate 22 is attached at a position of the rotation shaft 14 close to the rotor member 20 when viewed from the longitudinal direction of the rotation shaft 14. The friction plate 22 also has a disk-shaped main body portion 22a, and an insertion hole 22b is formed at the center of the main body portion 22a. The insertion hole 22b of the friction plate 22 passes through the main body portion 22a in the thickness direction, but the inner diameter thereof is slightly larger than the outer diameter of the rotation shaft 14. For this reason, the friction plate 22 is not fixed to the rotation shaft 14 and is supported so as to relatively rotate around the central axis line CL with respect to the rotation shaft 14 or the rotor member 20.

In a state where the rotation shaft 14 is inserted into the insertion hole 22b, the friction plate 22 may be displaced in the longitudinal direction (thrust direction). A bearing (not shown) may be provided between the outer circumferential surface of the rotation shaft 14 and the inner circumferential surface of the insertion hole 22b to freely slide along the rotation shaft 14, for example. The whole of the friction plate 22 is formed of a magnetic material (for example, iron).

### Electromagnetic Brake (Rotation Regulation)

The operation feeling imparting type input device 10 has, for example, an electromagnetic brake 24. The electromagnetic brake 24 has a case-type core 24a which has a hollow columnar shape, and a hoop winding 24b is disposed in the case-type core 24a. A bearing 24c formed of resin is provided at the center of the case-type core 24a, and the other end portion (lower end portion in Fig. 1) of the rotation shaft 14 is rotatably supported by the case-type core 24a through the bearing 24c. The electromagnetic brake 24 generates an electromagnetic force in the case-type core 24a in a state where electricity is conducted to the winding 24b, thereby absorbing the friction plate 22 in the thrust direction.

The other end of the rotation shaft 14 passes through the case-type core 24a and projects in a direction (lower direction in Fig. 1) opposite to the rotor member 20 or the friction plate 22, and a flange-shaped stopper 26 is attached to the rotation shaft 14 at the projected position. The stopper 26 prevents the rotation shaft 14 from slipping out from the case-type core 24a in the one-end direction of the rotation shaft 14 (upper direction in Fig. 1).

### Controller

The operation feeling imparting type input device 10 has a controller 28 as an electrical configuration. The controller 28 includes a microprocessor which has a processor (CPU) (not shown), a memory device, such as a ROM or a RAM, and peripheral circuits, such as an input/output circuit and the like. The rotation angle signal and the rotation direction signal which are output from the photo-interrupters 18 and 19 are A/D converted by the input/output circuit and then input to the CPU. The CPU of the controller 28 calculates the rotation angle and the rotation direction of the rotation shaft 14 (rotation operating member 12) on the basis of the input signals. The CPU of the controller 28 controls the activation (electricity conduction or non-conduction to the winding 24b) of the electromagnetic brake 24 on the basis of the calculation result of the rotation angle and the rotation direction.

### [Rotation Transmission Mechanism]

The operation feeling imparting type input device 10 has a rotation transmission mechanism which transmits the rotation of the rotor member 20 to the friction plate 22. A specific configuration of the rotation transmission mechanism will now be described.

### Engagement Protrusion

The friction plate 22 is provided with two engagement protrusions 22c which project from the surface thereof (upper surface in Fig. 1). The engagement protrusions 22c extend from the surface of the friction plate 22 (main body portion 22a) toward the rotor member 20 (thrust direction).

### [Receiving Portion]

At the rotor member 20, receiving portions 20c are formed at the positions corresponding to the two engagement protrusions 22c. The receiving portions 20c pass through the main body portion 20a in the thickness direction and extend, and the engagement protrusions 22c are respectively inserted into the receiving portions 20c. The engagement protrusions 22c have such a length sufficient to be projected from the surface (upper surface in Fig. 1) of the rotor member 20 (main body portion 20a) in a state being inserted into the receiving portions 20c.

At the rotor member 20, two clip-shaped members 30 are formed to correspond to the two engagement protrusions 22c. The clip-shaped members 30 are fixed to the surface of the main body portion 20a by using screws 32, for example. In Fig. 1, only a sectional shape is shown, but the clip-shaped members 30 are arranged so as to sandwich the projected ends of the engagement protrusions 22c from both sides. Hereinafter, this point will be described with reference to an additional drawing.

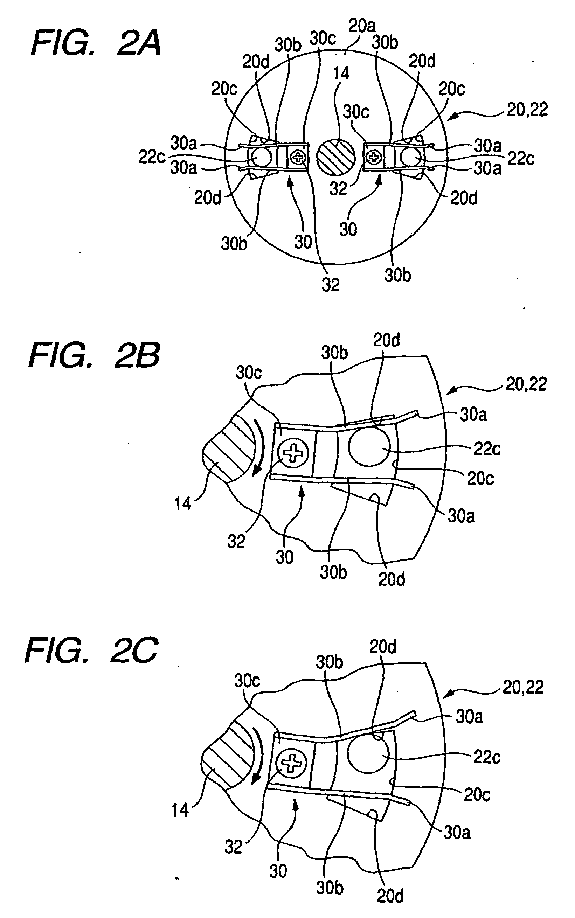

Figs. 2A to 2C are successive views (including a section taken along the line II-II in Fig. 1) showing the arrangement of the respective members on the surface of the rotor member 20 and the activation states.

### Engagement Clip portion

Fig. 2A: Each of the clip-shaped members 30 extends from the center of the rotor member 20 in the radial direction, and the front end portion thereof is formed in shape of a pair of engagement clip portions 30a. The clip-shaped member 30 is assembled in a state where the engagement protrusion 22c is sandwiched between the pair of engagement clip portions 30a.

### Elastic Portion

In the clip-shaped member 30, the intermediate portions connected to the pair of engagement clip portions 30a form elastic portions 30b. The elastic portions 30b function as, for example, a plate spring.

Each of the clip-shaped members 30 has a connection plate 30c near the center thereof, and the connection plate 30c extends in the circumferential direction along the surface of the rotor member 20. The clip-shaped member 30 is fixed to the rotor member 20 by the screw 32 at the position of the connection plate 30c. The elastic portions 30b extend in the radial direction with both edges as the base portions when viewed from the circumferential direction of the connection plate 30c.

### Regulation Walls

Each of the receiving portions 20c extends in the circumferential direction (the rotation direction of the rotor member 20) centered around the rotation shaft 14, and the inner surfaces at both ends of the receiving portion 20c when viewed from the rotation direction form a pair of regulation walls 20d. The pair of regulation walls 20d are arranged on both sides of the engagement protrusion 22c at an interval when viewed from the rotation direction of the rotor member 20.

### Rotation Transmission

When the electromagnetic brake 24 is not activated, if the rotation operating member 12 is operated to rotate and the rotor member 20 is rotated in the operation direction together with the rotation shaft 14, the rotational force is transmitted from the engagement clip portions 30a to the engagement protrusions 22c. Thus, the friction plate 22 can be rotated to follow the rotation of the rotor member 20.

### Elastic Force Impartment

Fig. 2B: In contrast, when the electromagnetic brake 24 is activated, as described above, the friction plate 22 is absorbed by an electromagnetic force, and rotation is locked. In this state, for example, when the rotation operating member 12 is operated to rotate in the direction of the arrow in the drawing, one of the elastic portions 30b is elastically deformed by a reactive force from the engagement protrusion 22c, thereby displacing the engagement clip portion 30a in the direction opposite to the rotation direction. In this case, the engagement protrusion 22c is permitted to be relatively moved between the pair of regulation walls 20d in the receiving portion 20c. Therefore, even if the friction plate 22 is locked, the relative rotation of the rotor member 20 is permitted, as shown in the drawing.

### Regulation by Regulation Walls

Fig. 2C: If the rotation operating member 12 is further operated to rotate, the engagement protrusion 22c eventually comes into contact with one of the regulation walls 20d (on the side opposite to the rotation direction) in the receiving portion 20c. In this state, the further relative rotation of the engagement protrusion 22c is regulated, and as a result, the rotation of the rotor member 20 is regulated. Therefore, the rotation operating member 12 cannot be further rotated, so the operator can be given a feeling of collision against a wall from the rotation operating member 12. As a result, the elastic portion 30b can be prevented from being excessively deformed.

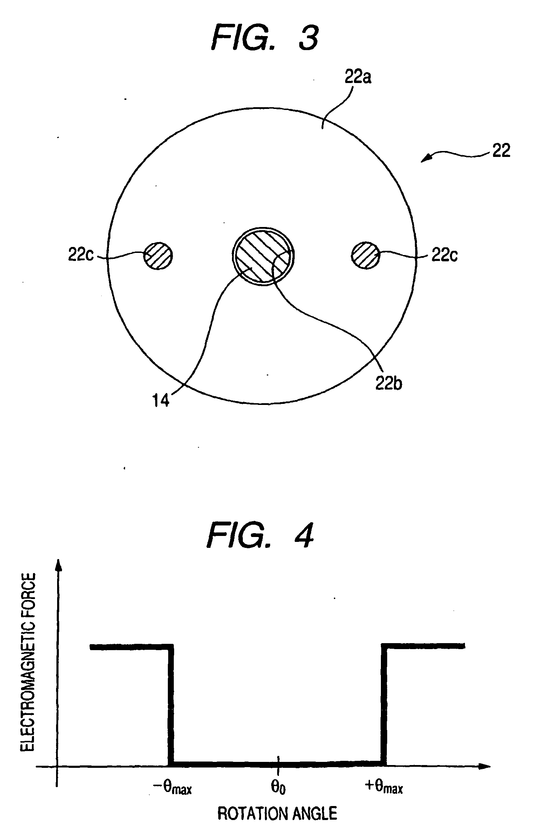

Fig. 3 is a diagram (including a section taken along the line III-III in Fig. 1) showing just the friction plate 22. The engagement protrusion 22c has, for example, a columnar shape (a circular shape in section), and comes into contact with a pair of engagement clip portions 30a on the outer circumferential surface (curved surface) thereof. Thus, as described above, when the elastic portion 30b is elastically deformed, the displacement of the engagement clip portion 30a can be smoothly guided along the outer circumferential surface. Although the engagement protrusion 22c has a columnar shape (a circular shape in section), the engagement protrusion 22c may have a prism shape (a rectangular shape in section).

### Control Example

Next, an example of control of the electromagnetic brake 24 by the controller 28 will be described. Fig. 4 is a diagram showing an example of the relationship (excitation pattern) between the rotation angle of the rotation operating member 12 and the electromagnetic force (frictional force) by the electromagnetic brake 24.

As described above, the CPU of the controller 28 calculates the current rotation angle of the rotation operating member 12 on the basis of the rotation angle signal and the rotation direction signal from the photo-interrupters 18 and 19. In this case, with regard to the rotation angle, an increase in one direction from a prescribed reference angle (θ0) can be expressed by a positive angle (+θ), and an increase in the opposite direction can be expressed by a negative angle (-θ).

In the example of the drawing, the rotation angle of the rotation operating member 12 can be limited symmetrically in two directions. Specifically, the upper limit angles (+θmax, -θmax) in two directions for control are set, and when the calculated rotation angle reaches any upper limit angle, the controller 28 prompts electricity to be conducted to the winding 24b of the electromagnetic brake 24, thereby generating in steps the maximum electromagnetic force. When this happens, the friction plate 22 is absorbed in the thrust direction, so as described above, the engagement protrusion 22c comes into contact with the regulation walls 20d and the rotation of the rotation operating member 12 is locked. It should suffice that the upper limit angles (+θmax, -θmax) may be set in expectation of the rotation angle when the engagement protrusion 22c comes into contact with the regulation walls 20d.

### Rotation Regulation

For example, it is assumed that the rotation angle of the rotation operating member 12 reaches the positive upper limit angle (+θmax) and the electromagnetic brake 24 is activated. In this case, even though the operator tries to further rotate the rotation operating member 12, locking is made by the electromagnetic brake 24, and the operation cannot be continued.

In this state, if the operator operates the rotation operating member 12 to rotate in the direction (negative direction) opposite to the previous direction, the other elastic portion 30b is elastically deformed, and then the engagement clip portion 30a on the side opposite to the direction of the rotation operation is displaced. When this happens, the rotation of the rotor member 20 in the direction opposite to the previous direction is permitted. In this case, the engagement protrusion 22c is permitted to be relatively moved toward the regulation wall 20d opposite to the regulation wall 20d with which the engagement protrusion 22c is in contact.

### Regulation Release

In this case, the rotation in the direction opposite to the previous direction is detected by the photo-interrupters 18 and 19, so the controller 28 deactivates the electromagnetic brake 24 on the basis of the excitation pattern in Fig. 4. When this happens, the absorption of the friction plate 22 is released, and the rotor member 20 is freely rotated. Thus, from the operator's side, the locking of the rotation operating member 12 is released.

With the operation feeling imparting type input device 10 of the first embodiment, the elastic portion 30b is elastically deformed in the rotation direction of the rotor member 20, so the length of the rotation shaft 14 in the thrust direction is not particularly limited. Therefore, the operation feeling imparting type input device 10 as a whole can be reduced in size in the thrust direction, and thus the whole of an apparatus (for example, an electronic apparatus or an in-vehicle electric component) into which the operation feeling imparting type input device 10 is incorporated can be reduced in size.

Even though the rotation operating member 12 is further operated to rotate during the activation of the electromagnetic brake 24, the regulation wall 20d comes into contact with the engagement protrusion 22c, thereby restricting further rotation. Therefore, the clip-shaped member 30 can be prevented from being broken or plastically deformed, and thus the lifespan of articles can be ensured.

### Second Embodiment

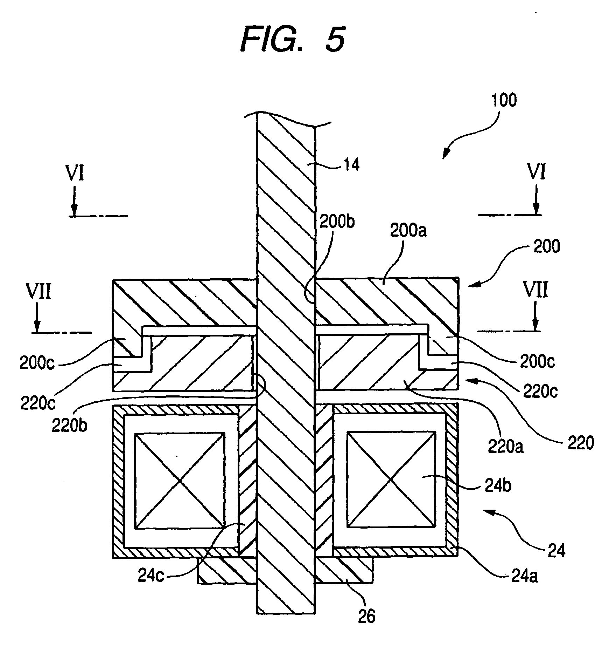

Fig. 5 is a longitudinal sectional view partially showing an operation feeling imparting type input device 100 of a second embodiment. The operation feeling imparting type input device 100 of the second embodiment has a rotor member 200 and a friction plate 220 which are different from those in the first embodiment. Other portions including the portions not shown in the drawings are the same as those in the first embodiment. Hereinafter, the same portions as those in the first embodiment are represented by the same reference numerals, and overlap descriptions will be omitted.

### Rotor Member

In the second embodiment, the rotor member 200 has, for example, a disk-shaped main body portion 200a, and the main body portion 200a is spread in the radial direction centered around the rotation shaft 14. A through hole 200b is formed at the center of the main body portion 200a. The through hole 200b is formed to pass through the main body portion 200a in the thickness direction. The rotor member 200 is fixed (fitted) to the rotation shaft 14 in a state where the rotation shaft 14 is inserted into the through hole 200b. For this reason, if the rotation operating member 12 is operated, the rotor member 200 is rotated around the central axis line CL together with the rotation shaft 14.

### Friction Plate

The friction plate 220 also has, for example, a disk-shaped main body portion 220a, and an insertion hole 220b is formed at the center of the main body portion 220a. In the second embodiment, the inner diameter of the insertion hole 220b of the friction plate 220 is set to be slightly larger than the outer diameter of the rotation shaft 14, so the friction plate 220 can be displaced in the longitudinal direction (thrust direction) of the rotation shaft 14.

### Engagement Protrusion, Engagement Clip portion

In the second embodiment, engagement protrusions 200c are formed on the rotor member 200. In this case, the engagement protrusions 200c project from the rotor member 200 toward the friction plate 220. In the second embodiment, engagement clip portions 220c are formed on the friction plate 220.

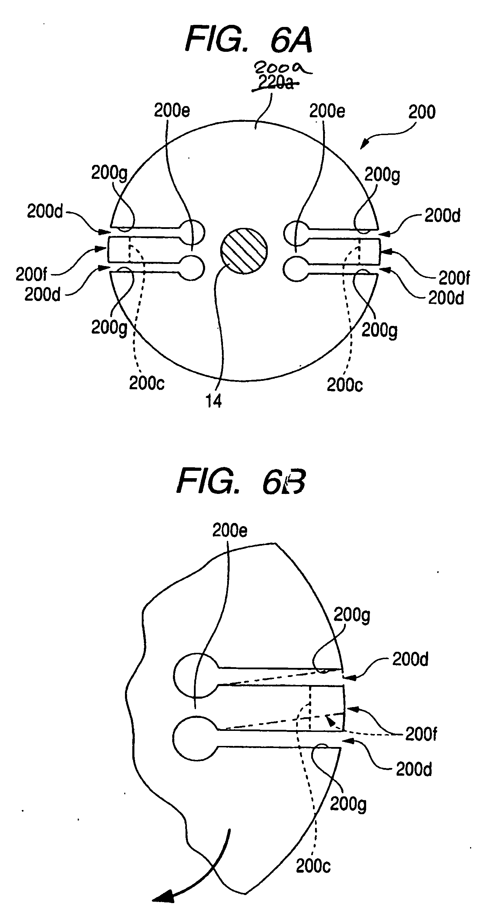

Figs. 6A and 6B are diagrams (including a section taken along the line VI-VI of Fig. 5) showing the arrangement of the respective members on the surface of the rotor member 200 and the activation states.

### Cutout Portion

Fig. 6A: Cutout portions 200d are formed in pairs at two places of the rotor member 200 when viewed from the circumferential direction of the main body portion 200a. The cutout portions 200d extend in parallel from the outer edge of the rotor member 200 toward the rotation shaft 14. Each portion 200f sandwiched between the cutout portions 200d extends in a peninsula shape from the inner position of the main body portion 200a to the outer edge, and at the front end thereof, the engagement protrusion 200c is formed. In the second embodiment, a base end portion at the inner position of the peninsula-shaped portion 200f forms an elastic portion 200e. A pair of cutout portions 200d form regulation walls 200g on both sides of the engagement protrusion 200c when viewed from the rotation direction of the rotor member 200.

### Elastic Force Impartment

Fig. 6B: In the second embodiment, when the rotation operating member 12 is operated to rotate in the direction of the arrow in the drawing in a state where the friction plate 220 is locked, the elastic portion 200e is elastically deformed by a reactive force from the engagement clip portion 220c. When this happens, as indicated by a two-dot-chain line in the drawing, the whole of the peninsula-shaped portion 200f is displaced, so the engagement protrusion 200c can be displaced in the direction opposite to the rotation direction. In this case, the engagement protrusion 200c is permitted to be relatively moved between a pair of regulation walls 200g in the cutout portions 200d. Therefore, in the second embodiment, as shown in the drawing, the relative rotation of the rotor member 200 is permitted in a state where the friction plate 220 is locked.

### Regulation by Regulation Walls

If the rotation operating member 12 is continuously operated to rotate after the electromagnetic brake 24 is activated, the engagement protrusion 200c (the side surface of the portion 200f) comes into contact with one of the regulation walls 200g (on the side opposite to the rotation direction) in the cutout portions 200d. In this case, the further relative movement of the engagement protrusion 200c is regulated, and as a result, the rotation of the rotor member 200 is regulated. When this happens, in the second embodiment, the operator can be given a feeling of collision against a wall from the rotation operating member 12. Similarly to the first embodiment, the elastic portion 200e can be prevented from being excessively deformed and from being broken.

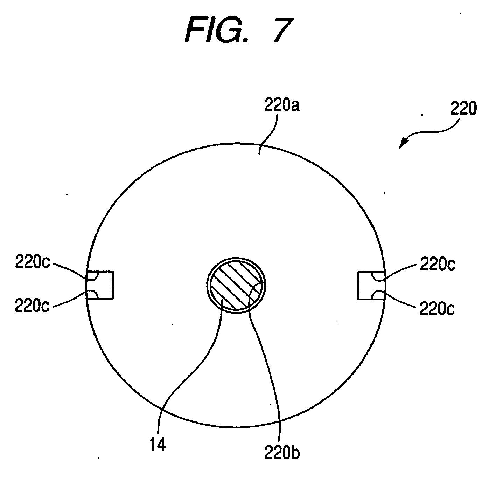

Fig. 7 is a diagram (including a section taken along the line VII-VII in Fig. 5) showing just the friction plate 220 in the second embodiment. In Fig. 7, the section of the engagement protrusion 200c is not shown. The engagement clip portions 220c are formed at an interval slightly larger than the width of the engagement protrusion 200c when viewed from the rotation direction. For this reason, the engagement clip portions 220c can transmit the rotation of the rotor member 200 to the friction plate 220 with the engagement protrusion 200c sandwiched therebetween, and can absorb the friction plate 220 in the thrust direction without being pulled to the engagement protrusion 200c when the electromagnetic brake 24 is activated.

In the second embodiment, no elastic portion is provided on the rotation shaft 14, so similarly to the first embodiment, the reduction in size in the thrust direction can be easily realized. Further, the elastic portions 200e are formed integrally with the main body portion 200a of the rotor member 200, so the number of parts can be reduced by as much.

### Third Embodiment

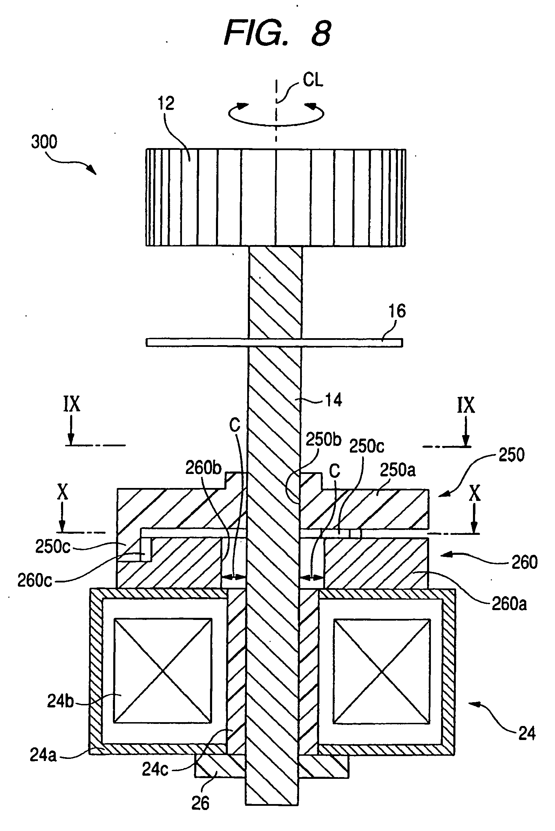

Next, Fig. 8 is a longitudinal sectional view partially showing the configuration of an operation feeling imparting type input device 300 of a third embodiment. The operation feeling imparting type input device 300 of the third embodiment also has a rotor member 250 and a friction plate 260 which are different from those in the first embodiment. Other portions including the portions not shown in the drawing are the same as those in the first embodiment, and overlap descriptions will be omitted.

### Rotor Member

In the third embodiment, the rotor member 250 has, for example, a disk-shaped main body portion 250a, and the main body portion 250a is spread in the radial direction centered around the rotation shaft 14. A through hole 250b is formed at the center of the main body portion 250a. The through hole 250b is formed to pass through the main body portion 250a in the thickness direction. The rotor member 250 is fixed (fitted) to the rotation shaft 14 in a state where the rotation shaft 14 is inserted into the through hole 250b. For this reason, if the rotation operating member 12 is operated, the rotor member 250 is rotated around the central axis line CL together with the rotation shaft 14.

### Friction Plate

The friction plate 260 also has, for example, a disk-shaped main body portion 260a, and an insertion hole 260b is formed at the center of the main body portion 260a. In the third embodiment, however, the inner diameter of the insertion hole 260b is set to be 2 to 2.5 times larger than the outer diameter of the rotation shaft 14, for example. For this reason, a sufficient clearance C is ensured between the outer circumferential surface of the rotation shaft 14 and the inner surface of the insertion hole 260b. The total clearance C on both sides of the rotation shaft 14 is set to be larger than the thickness of the main body portion 260a. Thus, the friction plate 260 is freely displaced in the thrust direction with respect to the rotation shaft 14, and also has a large degree of freedom in angular displacement with respect to the central axis line CL.

### Engagement Protrusion, Engagement Clip portion

In the third embodiment, similarly to the second embodiment, engagement protrusions 250c are formed on the rotor member 250. Thus, the engagement protrusions 250c project from the rotor member 250 toward the friction plate 260. Similarly, in the third embodiment, engagement clip portions 260c are formed on the friction plate 260.

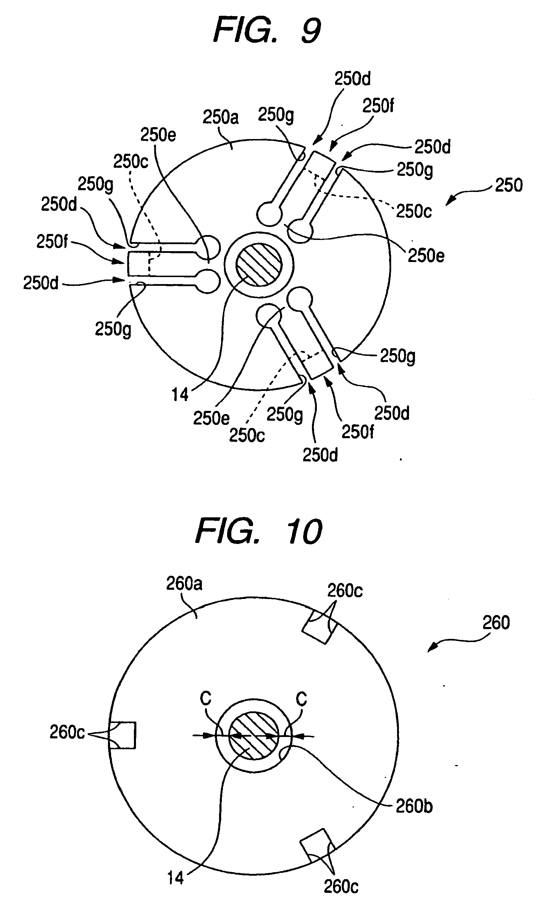

Fig. 9 is a diagram (including a section taken along the line IX-IX in Fig. 8) showing the arrangement of the respective members on the surface of the rotor member 250 and the activation states. In the third embodiment, the engagement protrusions 250c are formed at three places when viewed from the circumferential direction of the rotor member 250 (main body portion 250a). In this case, the engagement protrusions 250c are desirably arranged at regular intervals (angular pitch) when viewed from the circumferential direction. The cutout portions 250d, the peninsula-shaped portions 250f, the elastic portions 250e, and the regulation walls 250g have the same configuration and basic functions as those in the second embodiment.

Fig. 10 is a diagram (including a section taken along the line X-X in Fig. 8) showing just the friction plate 260 in the third embodiment. In Fig. 10, the section of the engagement protrusion 250c is not shown. In the third embodiment, similarly to the second embodiment, the engagement clip portions 260c are formed at an interval slightly larger than the width of the engagement protrusion 250c when viewed from the rotation direction.

### Contact Elasticity

In the third embodiment, the friction plate 260 can be constantly in contact with the electromagnetic brake 24 by the elastic force the elastic portions 250e. That is, in a state where the rotor member 250 is attached to the rotation shaft 14, the elastic portions 250e impart the elastic force through the engagement protrusions 250c in a direction (lower direction in Fig. 9) for clamping the friction plate 260. Thus, the friction plate 260 can be maintained in a state being in contact with the absorption surface (frictional surface) of the electromagnetic brake 24. Note that the elastic force is imparted such that, even through the friction plate 260 is in contact with the electromagnetic brake 24, smooth rotation (so-called sliding) is not obstructed.

In the third embodiment, similarly to the first and second embodiments, the reduction in size in the thrust direction can be easily realized. Further, similarly to the second embodiment, the elastic portions 250e are formed integrally with the main body portion 250a of the rotor member 250, so the number of parts can be reduced by as much.

In particular, in the third embodiment, the clearance C is provided, such that the posture of the friction plate 260 is not restricted by the rotation shaft 14. Thus, when the electromagnetic brake 24 is activated, the friction plate 260 can be absorbed constantly in a reasonable posture. For this reason, a variation in the frictional force which is generated when the electromagnetic brake 24 is activated is eliminated, and thus stable rotation regulation can be realized.

In the third embodiment, at least three engagement protrusions 250c are formed in the rotation direction of the rotor member 250 and sandwiched between the engagement clip portions 260c of the friction plate 260. Thus, the friction plate 260 can be prevented from being laterally shifted (decentered) with respect to the rotation shaft 14.

In the third embodiment, the friction plate 260 can be constantly in contact with the electromagnetic brake 24. Thus, when the electromagnetic brake 24 is activated, the friction plate 260 can be prevented from colliding against the cast-type core 24a, and an impact sound can be prevented from being generated.

### Fourth Embodiment

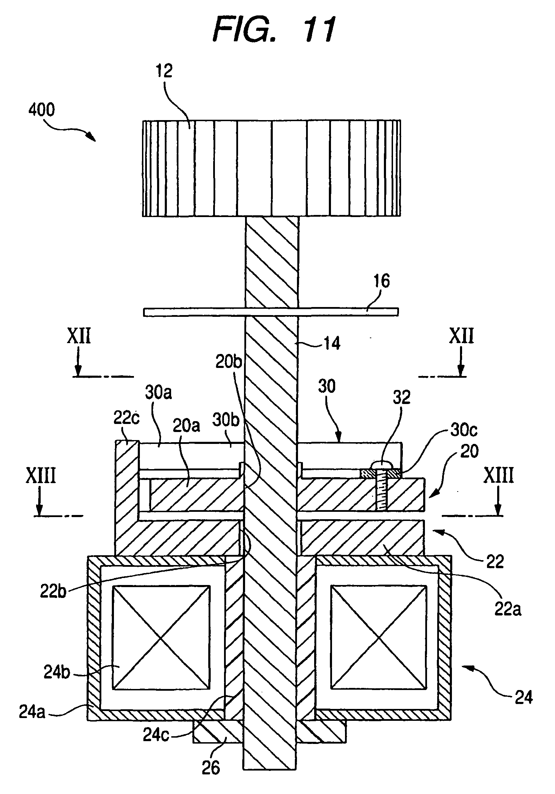

Fig. 11 is a longitudinal sectional view partially showing the configuration of an operation feeling imparting type input device 400 of a fourth embodiment. The operation feeling imparting type input device 400 of the fourth embodiment is different from the first embodiment in that one engagement protrusion 22c and one engagement clip portion 30a are respectively provided, but it basically has the same configuration as that of the first embodiment. Hereinafter, description will be made focusing on differences from the first embodiment.

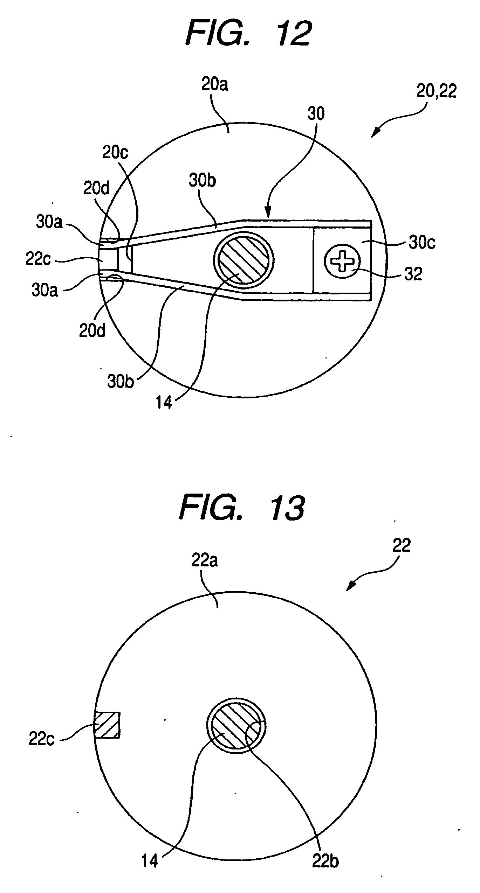

Fig. 12 is a successive view (including a section taken along the line XII-XII in Fig. 11) showing the arrangement of the respective members on the surface of the rotor member 20 and the activation states. In the fourth embodiment, a clip-shaped member 30 extends in the radial direction of the rotor member 20 with the rotation shaft 14 sandwiched. Thus, when viewed from the diameter direction of the rotor member 20, the front end portion of the clip-shaped member 30 on one side of the rotation shaft 14 forms a pair of engagement clip portions 30a, and a connection plate 30c is positioned on the other side. Elastic portions 30b are formed to be longer than those in the first embodiment, but have the same basic function.

A receiving portion 20c passes through the main body portion 20a in the thickness direction and has an opening at the outer edge of the main body portion 20a. That is, the receiving portion 20c is formed by cutting the main body portion 20a at the outer edge. In this case, the inner surfaces at both ends of the receiving portion 20c when viewed from the rotation direction form a pair of regulation walls 20d. Similarly to the first embodiment, the pair regulation walls 20d are positioned at an interval on both sides of the engagement protrusion 22c when viewed from the rotation direction of the rotor member 20.

Like the fourth embodiment, even though one engagement protrusion 22c and one engagement clip portion 30a are provided, when the electromagnetic brake 24 is not activated, if the rotation operating member 12 is operated to rotate and the rotor member 20 is rotated in the operation direction together with the rotation shaft 14, the rotational force of the rotor member 20 is transmitted to the engagement protrusion 22c in a state where the engagement protrusion 22c is sandwiched between a pair of engagement clip portions 30a. Thus, the friction plate 22 is rotated to follow the rotation of the rotor member 20.

Similarly, when the rotation operating member 12 is operated to rotate during the activation of the electromagnetic brake 24, similarly, one elastic portion 30b is elastically deformed by a reactive force from the engagement protrusion 22c, thereby displacing the engagement clip portion 30a in the direction opposite to the rotation direction. In this case, the engagement protrusion 22c is permitted to be relatively moved between the pair of regulation walls 20d in the receiving portion 20c. Therefore, even though the friction plate 22 is locked, the relative rotation of the rotor member 20 is permitted.

If the rotation operating member 12 is further operated during the activation of the electromagnetic brake 24, the engagement protrusion 22c comes into contact with one of the regulation walls 20d (on the side opposite to the rotation direction) in the receiving portion 20c, and further relative rotation of the engagement protrusion 22c is regulated. As a result, the rotation of the rotor member 20 is regulated, so the rotation operating member 12 cannot be rotated, and the operator can be given a feeling of collision against a wall. In this case, the elastic portions 30b can be prevented from being broken (yield deformation).

Fig. 13 is a diagram (including a section taken along the line XIII-XIII in Fig. 11) showing just the friction plate 22 in the fourth embodiment. In this case, the engagement protrusion 22c has, for example, a prism shape (a rectangular shape in section). Note that the engagement protrusion 22c may have a columnar shape (a circular shape in section), like the first embodiment.

### [Other Embodiments]

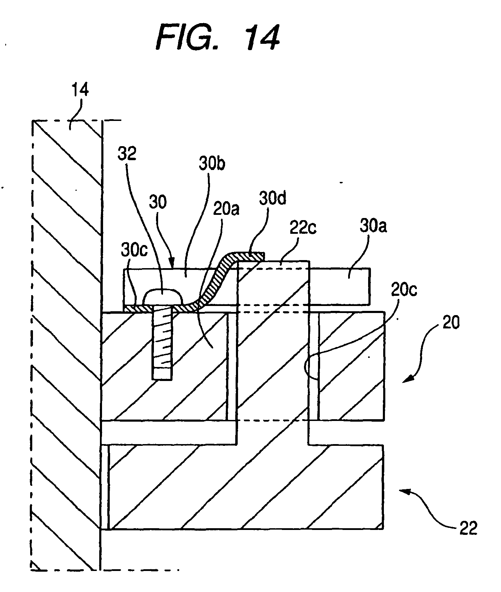

Fig. 14 is a partial section view showing an example where an additional element is provided at the clip-shaped member 30 of the first embodiment. A contact elastic plate 30d may be provided at the clip-shaped member 30 of the first embodiment to be integrally with the connection plate 30c.

The contact elastic plate 30d functions as a plate spring and extends from the inner position outward in a state where the base end thereof is connected to the connection plate 30c. The front end portion of the contact elastic plate 30d is in contact with the upper end of the engagement protrusion 22c, and in this state, the elastic force is imparted downward with respect to the engagement protrusion 22c. Thus, in the first embodiment, the friction plate 22 is constantly in contact with the electromagnetic brake 24, so the same advantages as in the third embodiment can be obtained.

The invention is not limited to the foregoing embodiments, and various modifications may be made. In the foregoing embodiments, a disk-shaped rotor member has been exemplified, but a rotor member having a polygonal plate shape may be used. Further, in the first and third embodiments, a plate spring-shaped elastic portion has been exemplified, but a coil spring-shaped elastic portion may be used.

The excitation pattern of the electromagnetic brake 24 is not limited to the above-described example. For example, an excitation pattern for imparting a feeling of click may be used, or an excitation pattern for imparting a feeling of resistance, which is changed in accordance with an increase in the rotation angle, may be used.

The detection of the rotation state may be realized by the combination of a reflecting mirror and a photo-switch as well as the combination of the code plate 16 and the photo-interrupters 18 and 19.

The shapes or arrangement of various members shown in the drawings are just examples, and they may be appropriately changed in carrying out the invention.

It should be understood by those skilled in the art that various modifications, combinations, sub-combinations and alterations may occur depending on design requirements and other factors insofar as they are within the scope of the appended claims.

## Claims

1. An operation feeling imparting type input device comprising:
a rotation shaft (14) supported so as to be rotatable together with a rotation operating member (12), which can be rotated by an operator;
rotation detection means having a body to be detected (16) which rotates together with the rotation shaft (14), and having a detector (18) which detects the rotation state of the body to be detected (16);
a rotor member (20) provided to be spread in a radial direction of the rotation shaft (14) and configured to rotate together with the rotation shaft (14);
a friction element (22) provided so as to be rotatable around the same central axis line as the rotation shaft (14) and the rotor member (20);
a rotation transmission mechanism (30) configured to transmit the rotation of the rotor member (20) to a friction member so as to rotate the friction element (22) so that it follows the rotor member (20);
rotation regulation means (24) configured to regulate the rotation of the friction element (22) by a frictional force due to the absorption;
control means (28) configured to control the operation state of the rotation regulation means (24) on the basis of the detection result of the rotation detection means; and
rotation elasticity imparting means configured to impart an elastic force in a rotation direction to the rotation transmission mechanism so as to permit the body to be detected (16) to be relatively rotated with respect to the friction element (22) together with the rotor member (20) if the rotation operating member (12) is operated to rotate in a state where the rotation of the friction element (22) is regulated by the rotation regulation means (24), wherein
the rotation transmission mechanism includes an engagement protrusion (22c) provided at the friction element (22) to project from the friction element (22) toward the rotor member (20), and
the rotation elasticity imparting means has an elastic portion (30b) which is elastically deformed by a reactive force from the engagement protrusion (22c) when the rotation operating member (12) is operated to rotate in a state where the rotation of the friction element (22) is regulated, so as to permit the relative rotation of the rotor member (20),
**characterized in that** the friction element is a friction plate (22) provided to be freely displaced in a thrust direction of the rotor member (20) with respect to the rotor member (20) that said engagement protrusion (22c) projects from the friction plate (22) in a direction parallel with the longitudinal axis of the rotation shaft, that the rotation regulating means is configured to absorb the friction plate (22) in the thrust direction of the rotor member (20) and the rotation transmission mechanism includes an engagement clip portion (30a) provided at the rotor member (20) to have a pair of elastically deformable clip walls which transmit a rotational force from the rotor member (20) to the engagement protrusion (22c) with the engagement protrusion (22c) sandwiched therebetween from both sides in the rotation direction.

2. The operation feeling imparting type input device according to claim 1, **characterized in that** the rotor member (20) has a receiving portion (20c) which includes a pair of regulation walls (20d) which are provided on both sides of the engagement clip portion (30a) at an interval in the rotation direction, and the receiving portion (20c) permits the engagement protrusion (22c) to be relatively moved in the rotation direction between the pair of regulation walls (20d) in a state where the engagement protrusion (22c) is received between the regulation walls (20d) and regulates the movement of the engagement protrusion (22c) in a state where the regulation walls (20d) are in contact with the engagement protrusion (22c).

3. An operation feeling imparting type input device comprising:
a rotation shaft (14) supported so as to be rotatable together with a rotation operating member (12), which can be rotated by an operator;
rotation detection means having a body to be detected (16) which rotates together with the rotation shaft (14), and having a detector (18) which detects the rotation state of the body to be detected (16);
a rotor member (200) provided to be spread in a radial direction of the rotation shaft (14) and configured to rotate together with the rotation shaft (14);
a friction element (220) provided so as to be rotatable around the same central axis line as the rotation shaft (14) and the rotor member (200);
a rotation transmission mechanism (30) configured to transmit the rotation of the rotor member (200) to a friction member so as to rotate the friction element (220) so that it follows the rotor member (200);
rotation regulation means (24) configured to regulate the rotation of the friction element (220) by a frictional force due to the absorption;
control means (28) configured to control the operation state of the rotation regulation means (24) on the basis of the detection result of the rotation detection means; and
rotation elasticity imparting means configured to impart an elastic force in a rotation direction to the rotation transmission mechanism so as to permit the body to be detected (16) to be relatively rotated with respect to the friction element (220) together with the rotor member (200) if the rotation operating member (12) is operated to rotate in a state where the rotation of the friction element (220) is regulated by the rotation regulation means (24), wherein the rotation transmission mechanism includes an engagement protrusion (200c) provided at the rotor member (200) to project from the rotor member (200) to-ward the friction element (220),
the rotation elasticity imparting means has an elastic portion (200e) which is elastically deformed by a reactive force when the rotation operating member (12) is operated to rotate in a state where the rotation of the friction element (220) is regulated, thereby displacing the engagement protrusion (200c) so as to permit the relative rotation of the rotor member (200),
wherein the friction element is a friction plate (220) provided to be freely displaced in a thrust direction of the rotor member (200) with respect to the rotor member (200) said engagement protrusion projects from the rotor member (200) in a direction parallel with the longitudinal axis of the rotation shaft, the rotation regulating means (24) is configured to absorb the friction plate (220) in the thrust direction of the rotor member (200),
an engagement clip portion (220c) provided at the friction plate (220) to have a pair of clip walls which receive a rotational force from the rotor member (200) through the engagement protrusion (200c) with the engagement protrusion (200c) sandwiched therebetween from both sides in rotation direction, and the reactive force is applied from the engagement clip portion.

4. The operation feeling imparting type input device according to claim 3, **characterized in that** the rotor member (200) has a pair of cutout portions (200d) which form a pair of regulation walls (200g) on both sides of the engagement protrusion (200c) at an interval in the rotation direction, the pair of cutout portions (200d) permit the displacement of the engagement protrusion (200c) in the rotation direction between the regulation walls (200g) and regulate the displacement of the engagement protrusion (200c) in a state where the regulation walls (200g) are in contact with the engagement protrusion (200c).

5. The operation feeling imparting type input device according to claim 4, **characterized in that** the rotor member (200) has a main body portion (200a) which has a disk shape centered around the rotation shaft (14), the pair of cutout portions (200d) are formed to extend from the outer edge of the main body portion (200a) toward the rotation shaft (14), part of a portion of the main body portion (200a) extending in a peninsula shape from an inner position to the outer edge while being sandwiched between the pair of cutout portions (200d) forms the engagement protrusion (200c), and a base end portion at the inner position forms the elastic portion (200e).

6. The operation feeling imparting type input device according to any one of claims 1 to 5,
**characterized in that** the friction plate (260) has
a through hole (260b) into which the rotation shaft (14) is inserted in the thickness direction, and
a clearance (C) which is defined between the inner circumferential surface of the through hole (260b) and the outer circumferential surface of the rotation shaft (14), and
the clearance (C) permits the displacement of the friction plate (260) in the thrust direction without restriction in the direction of the central axis line of the rotation shaft (14).

7. The operation feeling imparting type input device according to any one of claims 3 to 6,
**characterized in that** the rotor member (250) is provided with at least three engagement protrusions (250c) in the rotation direction, and the friction plate (260) is provided with the same number of engagement clip portions (260c) as the engagement protrusions (250c).

8. The operation feeling imparting type input device according to any one of claims 1 to 7, further comprising:
contact elasticity imparting means (30d) configured to impart an elastic force in the absorption direction to the friction plate (22), and permits free rotation in a state where the friction plate (22) is in contact with the rotation regulation means (24) by the elastic force.

9. The operation feeling imparting type input device according to claim 8,
**characterized in that** the contact elasticity imparting means clamps the engagement protrusion (22c), which projects from the rotor member (20) toward the friction plate (22), to the friction plate (22), thereby imparting the elastic force in the absorption direction through the engagement protrusion (22c).

## Patentansprüche

1. Betätigungsgefühl vermittelnde Eingabevorrichtung, aufweisend:
eine Drehwelle (14), die derart gelagert ist, das sie zusammen mit einem Rotationsbetätigungselement (12) drehbar ist, das von einer Bedienungsperson gedreht werden kann;
eine Rotationserfassungseinrichtung mit einem zu erfassenden Körper (16), der sich zusammen mit der Drehwelle (14) dreht, und mit einem Detektor (18), der den Rotationszustand des zu erfassenden Körpers (16) erfasst;
ein Rotorelement (20), das derart vorgesehen ist, dass es sich in einer Radialrichtung der Drehwelle (14) ausbreitet, und das derart ausgebildet ist, dass es sich zusammen mit der Drehwelle (14) dreht;
ein Reibungselement (22), das derart vorgesehen ist, dass es um die gleiche zentrale Achsenlinie wie die Drehwelle (14) und das Rotorelement (20) drehbar ist;
einen Rotationsübertragungsmechanismus (30), der zum Übertragen der Rotation des Rotorelements (20) zu einem Reibungselement ausgebildet ist, um das Reibungselement (22) derart zu drehen, dass es dem Rotorelement (20) folgt;
eine Rotationsreguliereinrichtung (24), die zum Regulieren der Rotation des Reibungselements (22) durch eine Reibungskraft aufgrund der Absorption ausgebildet ist;
eine Steuereinrichtung (28), die zum Steuern des Betriebszustands der Rotationsreguliereinrichtung (24) auf der Basis des Erfassungsresultats der Rotationserfassungseinrichtung ausgebildet ist; und
eine Rotationselastizität vermittelnde Einrichtung, die dazu ausgebildet ist, eine elastische Kraft in einer Rotationsrichtung auf den Rotationsübertragungsmechanismus aufzubringen, um so eine relative Rotation des zu erfassenden Körpers (16) in Bezug auf das Reibungselement (22) zusammen mit dem Rotorelement (20) zu ermöglichen, wenn das Rotationsbetätigungselement (12) in einem Zustand rotationsmäßig betätigt wird, in dem die Rotation des Reibungselements (22) durch die Rotätionsreguliereinrichtung (24) reguliert wird, wobei
der Rotationsübertragungsmechanismus einen Eingriffsvorsprung (22c) aufweist, der an dem Reibungselement (22) derart vorgesehen ist, dass er von dem Reibungselement (22) in Richtung zu dem Rotorelement (20) hin vorsteht, und
wobei die Rotationselastizität vermittelnde Einrichtung einen elastischen Bereich (30b) aufweist, der durch eine Reaktionskraft von dem Eingriffsvorsprung (22c) elastisch verformt wird, wenn das Rotationsbetätigungselement (12) in einem Zustand rotationsmäßig betätigt wird, in dem die Rotation des Reibungselements (22) reguliert wird, um die relative Rotation des Rotorelements (20) zuzulassen,
**dadurch gekennzeichnet, dass** es sich bei dem Reibungselement um eine Reibungsplatte (22) handelt, die in einer Axialrichtung des Rotorelements (20) in Bezug auf das Rotorelement (20) frei verschiebbar vorgesehen ist, dass der Eingriffsvorsprung (22c) von der Reibungsplatte (22) in einer zu der Längsachse der Drehwelle parallelen Richtung vorsteht, dass die Rotationsreguliereinrichtung dazu ausgebildet ist, die Reibungsplatte (22) in der Axialrichtung des Rotorelements (20) zu absorbieren, und dass der Rotationsübertragungsmechanismus einen Eingriffsklammerbereich (30e) aufweist, der an dem Rotorelement (20) derart vorgesehen ist, dass er ein Paar elastisch verformbare Klammerwände aufweist, die eine Rotationskraft von dem Rotorelement (20) zu dem Eingriffsvorsprung (22c) übertragen, wobei der Eingriffsvorsprung (22c) in Rotationsrichtung von beiden Seiten sandwichartig zwischen diesen angeordnet ist.

2. Betätigungsgefühl vermittelnde Eingabevorrichtung nach Anspruch 1,
**dadurch gekennzeichnet, dass** das Rotorelement (20) einen Aufnahmebereich (20c) aufweist, der ein Paar Regulierwände (20d) beinhaltet, die auf beiden Seiten des Eingriffsklammerbereichs (30a) in einem Abstand in der Rotationsrichtung vorgesehen sind, und dass der Aufnahmebereich (20c) eine relative Bewegung des Eingriffsvorsprungs (22c) in der Rotationsrichtung zwischen dem Paar der Regulierwände (20d) in einem Zustand zulässt, in dem der Eingriffsvorsprung (22c) zwischen den Regulierwänden (20d) aufgenommen ist, und die Bewegung des Eingriffsvorsprungs (22c) in einem Zustand reguliert, in dem die Regulierwände (20d) mit dem Eingriffsvorsprung (22c) in Kontakt stehen.

3. Betätigungsgefühl vermittelnde Eingabevorrichtung, aufweisend:
eine Drehwelle (14), die derart gelagert ist, das sie zusammen mit einem Rotationsbetätigungselement (12) drehbar ist, das von einer Bedienungsperson gedreht werden kann;
eine Rotationserfassungseinrichtung mit einem zu erfassenden Körper (16), der sich zusammen mit der Drehwelle (14) dreht, und mit einem Detektor (18), der den Rotationszustand des zu erfassenden Körpers (16) erfasst;
ein Rotorelement (200), das derart vorgesehen ist, dass es sich in einer Radialrichtung der Drehwelle (14) ausbreitet, und das derart ausgebildet ist, dass es sich zusammen mit der Drehwelle (14) dreht;
ein Reibungselement (220), das derart vorgesehen ist, dass es um die gleiche zentrale Achsenlinie wie die Drehwelle (14) und das Rotorelement (200) drehbar ist;
einen Rotationsübertragungsmechanismus (30), der zum Übertragen der Rotation des Rotorelements (200) zu einem Reibungselement ausgebildet ist, um das Reibungselement (220) derart zu drehen, dass es dem Rotorelement (200) folgt;
eine Rotationsreguliereinrichtung (24), die zum Regulieren der Rotation des Reibungselements (22) durch eine Reibungskraft aufgrund der Absorption ausgebildet ist;
eine Steuereinrichtung (28), die zum Steuern des Betriebszustands der Rotationsreguliereinrichtung (24) auf der Basis des Erfassungsresultats der Rotationserfassungseinrichtung ausgebildet ist; und
eine Rotationselastizität vermittelnde Einrichtung, die dazu ausgebildet ist, eine elastische Kraft in einer Rotationsrichtung auf den Rotationsübertragungsmechanismus aufzubringen, um so eine relative Rotation des zu erfassenden Körpers (16) in Bezug auf das Reibungselement (220) zusammen mit dem Rotorelement (200) zu ermöglichen, wenn das Rotationsbetätigungselement (12) in einem Zustand rotationsmäßig betätigt wird, in dem die Rotation des Reibungselements (220) durch die Rotationsreguliereinrichtung (24) reguliert wird, wobei
der Rotationsübertragungsmechanismus einen Eingriffsvorsprung (200c) aufweist, der an dem Rotorelement (200) derart vorgesehen ist, dass er von dem Rotorelement (200) in Richtung zu dem Reibungselement (220) hin vorsteht, und
wobei die Rotationselastizität vermittelnde Einrichtung einen elastischen Bereich (200e) aufweist, der durch eine Reaktionskraft elastisch verformt wird, wenn das Rotationsbetätigungselement (12) in einem Zustand rotationsmäßig betätigt wird, in dem die Rotation des Reibungselements (220) reguliert wird, um dadurch den Eingriffsvorsprung (200c) zu verlagern, um die relative Rotation des Rotorelements (200) zuzulassen,
wobei es sich bei dem Reibungselement um eine Reibungsplatte (220) handelt, die in einer Axialrichtung des Rotorelements (200) in Bezug auf das Rotorelement (200) frei verschiebbar vorgesehen ist, dass der Eingriffsvorsprung von dem Rotorelement (200) in einer zu der Längsachse der Drehwelle parallelen Richtung vorsteht, dass die Rotationsreguliereinrichtung (24) dazu ausgebildet ist, die Reibungsplatte (220) in der Axialrichtung des Rotorelements (20) zu absorbieren,
dass ein Eingriffsklammerbereich (220c) an der Reibungsplatte (220) derart vorgesehen ist, dass er ein Paar Klammerwände aufweist, die eine Rotationskraft von dem Rotorelement (200) durch den Eingriffsvorsprung (200c) aufnehmen, wobei der Eingriffsvorsprung (200c) in Rotationsrichtung von beiden Seiten sandwichartig zwischen diesen angeordnet ist, und
dass die Reaktionskraft von dem Eingriffsklammerbereich aufgebracht wird.

4. Betätigungsgefühl vermittelnde Eingabevorrichtung nach Anspruch 3,
**dadurch gekennzeichnet, dass** das Rotorelement (200) ein Paar Aussparungsbereiche (200d) aufweist, die ein Paar Regulierwände (200b) auf beiden Seiten des Eingriffsvorsprungs (200c) in einem Abstand in der Rotationsrichtung bilden, wobei das Paar der Aussparungsbereiche (200d) die Verlagerung des Eingriffsvorsprungs (200c) in der Rotationsrichtung zwischen den Regulierwänden (200g) zulässt und die Verlagerung des Eingriffsvorsprungs (200c) in einem Zustand reguliert, in dem die Regulierwände (200g) mit dem Eingriffsvorsprung (200c) in Kontakt stehen.

5. Betätigungsgefühl vermittelnde Eingabevorrichtung nach Anspruch 4,
**dadurch gekennzeichnet, dass** das Rotorelement (200) einen Hauptkörperbereich (200a) aufweist, der eine Scheibenform zentriert um die Drehwelle (14) besitzt, dass das Paar der Aussparungsbereiche (200d) derart ausgebildet ist, dass sich diese von dem äußeren Rand des Hauptkörperbereichs (200a) in Richtung auf die Drehwelle (14) erstrecken, dass ein Teil eines Bereichs des Hauptkörperbereichs (200a), der sich halbinselförmig von einer inneren Position zu dem äußeren Rand erstreckt, wobei er zwischen dem Paar der Aussparungsbereiche (200d) sandwichartig angeordnet ist, den Eingriffsvorsprung (200c) bildet und ein Basisendbereich an der inneren Position den elastischen Bereich (200e) bildet.

6. Betätigungsgefühl vermittelnde Eingabevorrichtung nach einem der Ansprüche 1 bis 5,
**dadurch gekennzeichnet, dass** die Reibplatte (260) aufweist:
ein Durchgangsloch (260b), in das die Drehwelle (14) in Richtung der Dicke eingesetzt ist; und
einen Freiraum (C), der zwischen der Innenumfangsfläche des Durchgangslochs (260b) und der Außenumfangsfläche der Drehwelle (14) gebildet ist ist, und
dass der Freiraum (C) eine Verlagerung der Reibungsplatte (260) in der Axialrichtung ohne Einschränkung in der Richtung der zentralen Achsenlinie der Drehwelle (14) zulässt.

7. Betätigungsgefühl vermittelnde Eingabevorrichtung nach einem der Ansprüche 3 bis 6,
**dadurch gekennzeichnet, dass** das Rotorelement (250) in der Rotationsrichtung mit mindestens drei Eingriffsvorsprüngen (250c) versehen ist und die Reibungsplatte (260) mit der gleichen Anzahl von Eingriffsklammerbereichen (260c) wie Eingriffsvorsprüngen (250c) versehen ist.

8. Betätigungsgefühl vermittelnde Eingabevorrichtung nach einem der Ansprüche 1 bis 7, weiterhin aufweisend:
eine Kontaktelastizität vermittelnde Einrichtung (30d), die dazu ausgebildet ist, eine elastische Kraft in der Absorptionsrichtung auf die Reibungsplatte (22) auszuüben, und die eine freie Rotation in einem Zustand zulässt, in dem die Reibungsplatte (22) mit der Rotationsreguliereinrichtung (24) durch die elastische Kraft in Kontakt steht.

9. Betätigungsgefühl vermittelnde Eingabevorrichtung nach Anspruch 8,
**dadurch gekennzeichnet, dass** die Kontaktelastizität vermittelnde Einrichtung den Eingriffsvorsprung (22c), der vom Rotorelement (20) in Richtung auf die Reibungsplatte (22) vorsteht, gegen die Reibungsplatte (22) klemmt, um dadurch die elastische Kraft in der Absorptionsrichtung durch den Eingriffsvorsprung (22c) aufzubringen.

## Revendications

1. Dispositif d'entrée du type fournissant une sensation de fonctionnement, comprenant :
un axe rotatif (14) supporté de manière à être rotatif en même temps qu'un élément de fonctionnement rotatif (12), qui peut être mis en rotation par un opérateur ;
un moyen de détection de rotation ayant un corps à détecter (16) qui tourne en même temps que l'axe rotatif (14), et comportant un détecteur (18) qui détecte l'état de rotation du corps à détecter (16) ;
un élément de rotor (20) prévu pour s'étendre dans une direction radiale de l'axe rotatif (14) et configuré pour tourner en même temps que l'axe rotatif (14) ;
un élément de friction (22) prévu pour être rotatif autour du même axe central que l'axe rotatif (14) et l'élément de rotor (20) ;
un mécanisme de transmission de rotation (30) configuré pour transmettre la rotation de l'élément de rotor (20) à un élément de friction afin de faire tourner l'élément de friction (22) de telle façon qu'il suive l'élément de rotor (20) ;
un moyen de régulation de rotation (24) configuré pour réguler la rotation de l'élément de friction (22) par une force de friction due à l'absorption ;
un moyen de commande (28) configuré pour commander l'état de fonctionnement du moyen de régulation de rotation (24) en se basant sur le résultat de la détection du moyen de détection de rotation ; et
un moyen imprimant une élasticité de rotation, configuré pour imprimer une force élastique dans une direction de rotation au mécanisme de transmission de rotation afin de permettre au corps à détecter (16) d'être mis en rotation relative par rapport à l'élément de friction (22) en même temps que l'élément de rotor (20) si l'élément de fonctionnement rotatif (12) est actionné pour tourner dans un état où la rotation de l'élément de friction (22) est régulée par le moyen de régulation de rotation (24), dans lequel
le mécanisme de transmission de rotation comprend une protubérance de mise en prise (22c) prévue sur l'élément de friction (22) pour faire saillie depuis l'élément de friction (22) vers l'élément de rotor (20), et
le moyen imprimant une élasticité de rotation comporte une partie élastique (30b) qui est déformée élastiquement par une force de réaction provenant de la protubérance de mise en prise (22c) quand l'élément de fonctionnement rotatif (12) est actionné pour tourner dans un état où la rotation de l'élément de friction (22) est régulée, afin de permettre la rotation relative de l'élément de rotor (20),
**caractérisé en ce que** l'élément de friction est une plaque de friction (22) prévue pour être déplacée librement dans une direction de poussée de l'élément de rotor (20) par rapport à l'élément de rotor (20) de sorte que ladite protubérance de mise en prise (22c) fait saillie depuis la plaque de friction (22) dans une direction parallèle à l'axe longitudinal de l'axe rotatif, **en ce que** le moyen de régulation de rotation est configuré pour absorber la plaque de friction (22) dans la direction de poussée de l'élément de rotor (20) et le mécanisme de transmission de rotation comprend une partie pince de mise en prise (30a) placée au niveau de l'élément de rotor (20) pour avoir une paire de parois de pince élastiquement déformables qui transmettent une force de rotation de l'élément de rotor (20) à la protubérance de mise en prise (22c) avec la protubérance de mise en prise (22c) prise entre eux depuis les deux côtés dans la direction de rotation.

2. Dispositif d'entrée du type fournissant une sensation de fonctionnement selon la revendication 1, **caractérisé en ce que** l'élément de rotor (20) comporte une partie réceptrice (20c) qui comprend une paire de parois de régulation (20d) qui sont prévues des deux côtés de la partie pince de mise en prise (30a) avec un intervalle dans la direction de rotation, et la partie réceptrice (20c) permet à la protubérance de mise en prise (22c) d'être déplacée relativement dans la direction de rotation entre les deux parois de régulation (20d) dans un état dans lequel la protubérance de mise en prise (22c) est reçue entre les parois de régulation (20d) et régule le mouvement de la protubérance de mise en prise (22c) dans un état dans lequel les parois de régulation (20d) sont en contact avec la protubérance de mise en prise (22c).

3. Dispositif d'entrée du type fournissant une sensation de fonctionnement, comprenant :
un axe rotatif (14) supporté de manière à être rotatif en même temps qu'un élément de fonctionnement rotatif (12), qui peut être mis en rotation par un opérateur ;
un moyen de détection de rotation ayant un corps à détecter (16) qui tourne en même temps que l'axe rotatif (14), et comportant un détecteur (18) qui détecte l'état de rotation du corps à détecter (16) ;
un élément de rotor (200) prévu pour s'étendre dans une direction radiale de l'axe rotatif (14) et configuré pour tourner en même temps que l'axe rotatif (14) ;
un élément de friction (220) prévu pour être rotatif autour du même axe central que l'axe rotatif (14) et l'élément de rotor (200) ;
un mécanisme de transmission de rotation (30) configuré pour transmettre la rotation de l'élément de rotor (200) à un élément de friction afin de faire tourner l'élément de friction (220) de telle façon qu'il suive l'élément de rotor (200) ;
un moyen de régulation de rotation (24) configuré pour réguler la rotation de l'élément de friction (220) par une force de friction due à l'absorption ;
un moyen de commande (28) configuré pour commander l'état de fonctionnement du moyen de régulation de rotation (24) en se basant sur le résultat de la détection du moyen de détection de rotation ; et
un moyen imprimant une élasticité de rotation, configuré pour imprimer une force élastique dans une direction de rotation au mécanisme de transmission de rotation afin de permettre au corps à détecter (16) d'être mis en rotation relative par rapport à l'élément de friction (220) en même temps que l'élément de rotor (200) si l'élément de fonctionnement rotatif (12) est actionné pour tourner dans un état où la rotation de l'élément de friction (220) est régulée par le moyen de régulation de rotation (24), dans lequel le mécanisme de transmission de rotation comprend une protubérance de mise en prise (200c) prévue sur l'élément de rotor (200) pour faire saillie depuis l'élément de rotor (200) vers l'élément de friction (220),
le moyen imprimant une élasticité de rotation comporte une partie élastique (200e) qui est déformée élastiquement par une force de réaction quand l'élément de fonctionnement rotatif (12) est actionné pour tourner dans un état où la rotation de l'élément de friction (220) est régulée, ce qui déplace la protubérance de mise en prise (200c) afin de permettre la rotation relative de l'élément de rotor (200),
que l'élément de friction est une plaque de friction (220) prévue pour être déplacée librement dans une direction de poussée de l'élément de rotor (200) par rapport à l'élément de rotor (200) de sorte que ladite protubérance de mise en prise fait saillie depuis l'élément de rotor (200) dans une direction parallèle à l'axe longitudinal de l'axe rotatif, le moyen de régulation de rotation (24) est configuré pour absorber la plaque de friction (220) dans la direction de poussée de l'élément de rotor (200),
une partie pince de mise en prise (220c) placée au niveau de la plaque de friction (220) pour avoir une paire de parois de pince qui reçoivent une force de rotation de l'élément de rotor (200) à travers la protubérance de mise en prise (200c) avec la protubérance de mise en prise (200c) prise entre eux depuis les deux côtés dans la direction de rotation, et la force de réaction est appliquée depuis la partie pince de mise en prise.

4. Dispositif d'entrée du type fournissant une sensation de fonctionnement selon la revendication 3, **caractérisé en ce que** l'élément de rotor (200) comporte une paire de parties découpées (200d) qui forment une paire de parois de régulation (200g) de chaque côté de la protubérance de mise en prise (200c) avec un intervalle dans la direction de rotation, les deux parties découpées (200d) permettent le déplacement de la protubérance de mise en prise (200c) dans la direction de rotation entre les parois de régulation (200g) et régulent le déplacement de la protubérance de mise en prise (200c) dans un état dans lequel les parois de régulation (200g) sont en contact avec la protubérance de mise en prise (200c).

5. Dispositif d'entrée du type fournissant une sensation de fonctionnement selon la revendication 4, **caractérisé en ce que** l'élément de rotor (200) comporte une partie de corps principal (200a) qui a une forme de disque centrée autour de l'axe rotatif (14), les deux parties découpées (200d) étant formées pour s'étendre du bord extérieur de la partie de corps principal (200a) vers l'axe rotatif (14), une partie d'une portion de la partie de corps principal (200a) s'étendant en forme de péninsule d'une position intérieure vers le bord extérieur tout en étant prise entre les deux parties découpées (200d) forme la protubérance de mise en prise (200c), et une partie d'extrémité de base, au niveau de la position intérieure, forme la partie élastique (200e).

6. Dispositif d'entrée du type fournissant une sensation de fonctionnement selon l'une quelconque des revendications 1 à 5, **caractérisé en ce que** la plaque de friction (260) comporte un trou traversant (260b) dans lequel est inséré l'axe rotatif (14) dans la direction de l'épaisseur, et un espace libre (C) qui est défini entre la surface périphérique intérieure du trou traversant (260b) et la surface périphérique extérieure de l'axe rotatif (14), et l'espace libre (C) permet le déplacement de la plaque de friction (260) dans la direction de poussée sans restriction dans la direction de l'axe central de l'axe rotatif (14).

7. Dispositif d'entrée du type fournissant une sensation de fonctionnement selon l'une quelconque des revendications 3 à 6, **caractérisé en ce que** l'élément de rotor (250) est pourvu d'au moins trois protubérances de mise en prise (250c) dans la direction de rotation, et la plaque de frottement (260) est pourvue du même nombre de parties pinces de mise en prise (260c) que les protubérances de mise en prise (250c).

8. Dispositif d'entrée du type fournissant une sensation de fonctionnement selon l'une quelconque des revendications 1 à 7, comprenant en outre :
un moyen imprimant une élasticité de contact (30d), configuré pour imprimer une force élastique dans la direction d'absorption à la plaque de friction (22), et qui permet une rotation libre dans un état dans lequel la plaque de friction (22) est en contact avec le moyen de régulation de rotation (24) par la force élastique.

9. Dispositif d'entrée du type fournissant une sensation de fonctionnement selon la revendication 8, **caractérisé en ce que** le moyen imprimant une élasticité de contact serre la protubérance de mise en prise (22c), qui fait saillie de l'élément de rotor (20) vers la plaque de friction (22), sur la plaque de friction (22), imprimant ainsi la force élastique dans la direction d'absorption à travers la protubérance de mise en prise (22c).
